Europäisches Patentamt

European Patent Office

Office européen des brevets

(19)

(11) Publication number: 0 270 751
A2

(12) # EUROPEAN PATENT APPLICATION

(21) Application number: 87113266.8

(22) Date of filing: 10.09.87

(51) Int. Cl.4: G01N 27/56

(30) Priority: 11.12.86 JP 191495/86 U

(43) Date of publication of application:
15.06.88 Bulletin 88/24

(84) Designated Contracting States:
AT BE CH DE ES FR GB GR IT LI NL SE

(71) Applicant: HORIBA, LTD.
2 Miyanohigashi-machi Kissyoin
Minami-ku Kyoto(JP)

(72) Inventor: Tomita, Katsuhiko
8-17, 2-chome, Kinugawa
Ohtsu-city Shiga-prefecture(JP)
Inventor: Mototsune, Akemi
Rumongo 105 2003-6, Higashi-tsuda-cho
Matsue-city Shimane-prefecture(JP)
Inventor: Kojima, Junji
500-120, Nimyo-cho
Nara-city(JP)

(74) Representative: Patentanwälte TER MEER -
MÜLLER - STEINMEISTER
Mauerkircherstrasse 45
D-8000 München 80(DE)

(54) Electrolyte solution for use in electrodes for measuring ions and method for its manufacture.

(57) Described are an electrolyte solution for ion-measuring electrodes comprising a solution being gelatinized with a gelatinizer and containing a gel-evaporation inhibitor, which solution may be used in the shape of a gel-like member as an internal solution, a buffer solution, a pH-adjusting solution, an ion-adjusting solution, a calibrating standard solution or a combination thereof and which because of its being gelatinized can be easily handled and because of the content of a gel-evaporation inhibitor can be exhibited for a long time to air without any deterioration such as a change in the concentration or pH and while keeping the surface thereof in a moderate wet condition. Furtheron a method is disclosed for the manufacture of said electrolyte solutions comprising dissolving a gel-evaporation inhibitor in the appointed aqueous electrolyte solution, adding a gelatinizer to the solution obtained, molding and gelatinizing the resulting solution, which preferably is molded before or after gelatinizing to a predetermined shape.

EP 0 270 751 A2

Fig.3

## TER MEER-MÜLLER-STEINMEISTER & PARTNER
### PATENTANWÄLTE - EUROPEAN PATENT ATTORNEYS

Dr. Nicolaus ter Meer, Dipl.-Chem.  Helmut Steinmeister, Dipl.-Ing.
Frithjof E. Müller, Dipl.-Ing.  Manfred Wiebusch

Mauerkircherstrasse 45  Artur-Ladebeck-Strasse 51
D-8000 MÜNCHEN 80  D-4800 BIELEFELD 1

tM/cb

HO-255     September 10, 1987

HORIBA, LTD.

2 Miyanohigashi-machi, Kissyoin

Minami-ku, Kyoto, Japan

---

ELECTROLYTE SOLUTION FOR USE IN ELECTRODES FOR MEASURING
IONS AND METHOD FOR ITS MANUFACTURE

---

Priority: December 11, 1986, Japan, No. 61-191495/86 (U)

## BACKGROUND OF THE INVENTION

### Field of the Invention

The present invention relates to a gelatinized electrolyte solution which can be very suitably used as a gel-like member as an internal liquid, for the preservation of electrodes or for the calibration of glass electrodes for measuring ions, reference electrodes therefor and the like (hereinafter called generically electrodes for measuring ions) particularly in the case where the electrode for measuring ions is constructed as a small-sized sheet.

## Description of the Prior Art

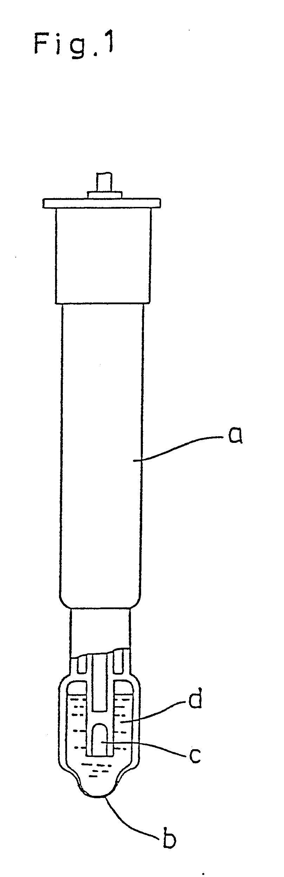

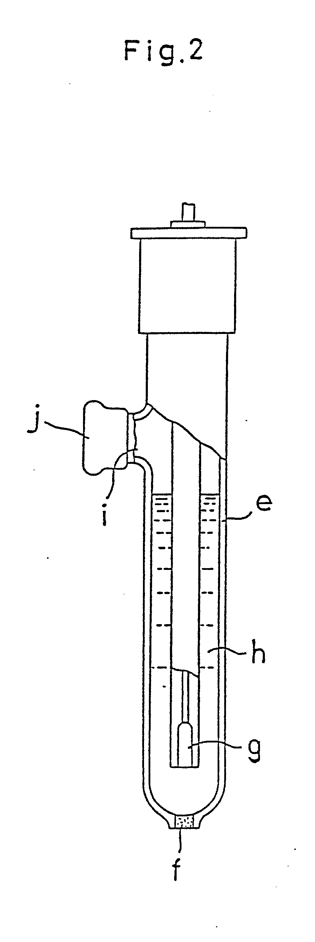

The prior art glass electrodes for measuring pH, pNa and the like as shown in Fig. 1 comprise a supporting pipe formed of an electrically insulating glass, an ion-response glass membrane b responsive to pH, pNa and the like having a semispherical shape formed at a pointed end of said supporting pipe a by the balloon method so as adhere to said pointed end, an internal electrode c comprising for example an Ag wire, the surface of which is coated with AgCl, provided in the supporting pipe a, and an internal solution d comprising for example a 3.3 M-aqueous solution of KCl supersaturated by AgCl with a phosphoric acid-buffer solution added enclosed in said internal electrode c. In addition, the prior art reference electrodes as shown in Fig. 2 comprise a supporting pipe e formed of electrically insulating glass, a liquid junction member f formed of for example an inorganic sintered porous substance, an organic high molecular porous substance and the like impregnated with KCl put in a hole formed in a pointed end portion of the supporting pipe e, an internal electrode g comprising an Ag wire, the surface of which is coated with AgCl in the same manner as in the above described glass electrode, provided in the supporting pipe e, and an internal solution h comprising for example a 3.3 M-aqueous solution of KCl supersaturated by AgCl with a phosphoric acid-buffer solution added enclosed in said internal electrode g. In Fig. 2, i designates an internal solution-replenishing port having a cap j provided in said supporting pipe e so as to replenish said internal solution h with the consumption of the internal solution h.

Such prior art glass electrodes and reference electrodes exhibit the disadvantage that they are relatively large-sized and difficult to massproduce, so that they are not only remarkably expensive in the manufacture but also not

- 3 -

so handy in the measuring operation, and it is necessary to preserve the glass electrode in pure water and the reference electrode in a 3.3 M-aqueous solution of KCl, which is same as the internal solution, when they are not being used.

Furthermore, the calibration (for example pH calibration) of said glass electrode is carried out with a standard solution (in short, a phthalic acid-standard solution having a pH of 4, a neutral phosphoric acid-standard solution having a pH of 7 and a sodium borate-standard solution having a pH of 9), wherein not only a relatively large amount of each standard solution is required but also a vessel (beaker and the like) for receiving the standard solution. In addition, when these standard solutions are left unattended in open condition, they are apt to change their concentration, deposit crystals and are deteriorated, so that it is considerably difficult to preserve them for a long time in excellent condition. Accordingly, it is necessary to exchange the standard solutions in a relatively high frequency, which is remarkably troublesome in use and uneconomical.

## SUMMARY OF THE INVENTION

The present invention relates to an electrolyte solution for use in electrodes for measuring ions which can solve the above defects of the conventional solutions, which is characterized in that said electrolyte solution, which can be an internal liquid, a buffer solution, a pH-adjusting solution, an ion-adjusting solution, a calibrating standard solution, or combinations thereof, is gelatinized with a gelatinizer and contains a gel-evaporation inhibitor.

According to the present invention, a remarkably compact sheet-type electrode for measuring ions superior in operation and maintenance can be provided. In addition, the possibility of very easily and economically carrying out the preservation of the glass electrode portion and the reference electrode portion of a sheet-type electrode for measuring ions as well as the calibration of the glass electrode portion has been opened.

## SHORT DESCRIPTION OF THE DRAWINGS

Fig. 1    shows a prior art glass electrode;

Fig. 2    shows a prior art reference electrode;

Fig. 3    shows a compound electrode for use in the measurement of pH comprising a preferred embodiment of the present invention;

Figs. 4 and 5 show a preferred embodiment of the present invention comprising an electrode for use in the measurement of salts;

Figs. 6 to 8 comprise a preferred embodiment of the present invention covering a sheet type compound electrode for use in the measurement of pH;

Fig. 9    shows an apparatus for the measurement of ions comprising the electrolytic solution according to the present invention;

Fig. 10    shows the measuring apparatus in a desk electronic computer type shape wherein the electrolyte solution of the present invention is used;

Fig. 11    shows an electrolyte solution of the present invention molded to the appointed shape for use in the apparatus shown in Fig. 9;

Fig. 12    shows a calibrating standard solution according to the present invention;

Figs. 13 and 14 show a second preferred embodiment of a calibrating standard solution according to the present invention;

Fig. 15    demonstrates an electrolyte solution of the present invention for use as an internal solution;

Fig. 16    shows the moisture-holding function of the high-humidity-holding water containing jelly used in the present invention as a gel-evaporation inhibitor;

Fig. 17    shows an electrolyte solution of the invention for use in the calibration of the pH of an electrode according to a further preferred embodiment; and

Fig. 18    shows an electrolyte solution of the present invention for use in the preservation of a glass electrode and a reference electrode.

### DESCRIPTION OF THE PREFERRED EMBODIMENTS

The preferred embodiments of the present invention will be below described with reference to an internal solution of an electrode for measuring ions.

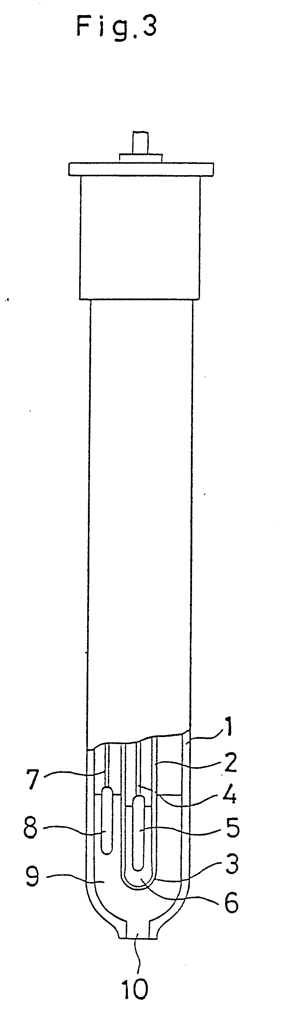

Referring now to Fig. 3 which shows a compound electrode for use in the measurement of pH, reference numeral 1 designates a supporting pipe formed of glass and the like, reference numeral 2 designates an inside cylinder formed of glass and the like inserted into said supporting pipe 1, and said inside cylinder 2 being provided with a responsive glass membrane 3 formed in an end portion thereof. Reference nu-

meral 4 designates a silver wire coated with silver chloride 5 inserted into the inside cylinder 2 provided with an end portion thereof constructed as an internal electrode for use in the measurement. Reference numeral 6 designates a gelatinized internal solution put in the inside cylinder 2 for coating said internal electrode 5 for use in the measurement.

Reference numeral 7 designates a silver wire coated with silver chloride inserted into the supporting pipe 1 outside of the inside cylinder 2 and provided with an end portion thereof constructed as an internal electrode 8 for use as the reference electrode. Reference numeral 9 designates a gelatinized internal solution put in the supporting pipe 1 so as to coat on the end portion of the inside cylinder 2 and the internal electrode 8 for use as a reference electrode and partially exposed out of the supporting pipe 1 to construct a liquid junction 10.

Said gelatinized internal solutions 6, 9 are formed of a 3.3 M-aqueous solution of KCl (supersaturated by AgCl) and glycerine gelatinized with agar-agar. The gel-evaporation does not occur and the surface of the gelatinized internal solutions 6, 9 is maintained in wet condition even when they are left for a long time unattended in air.

In the above described construction, the liquid junction 10 is formed of a part of the gelatinized internal solution 9 and its surface is maintained in a wet condition, so that the liquid junction 10 can be repeatedly used without cutting off a part thereof. In addition, even though air passes through the liquid junction 10 or the outside pipe 1 or the inside cylinder 2, the gelatinized internal liquids 6, 9 are not dried, so that the measurement accuracy can be stabilized and it becomes unnecessary to tightly close the closed portion of the outside pipe 1 and the inside cylin-

der 2, whereby the manufacturing process can be simplified.

A 3.3 M-aqueous saturated solution of KCl (supersaturated by AgCl) with fine AgCl powder added and an aqueous solution of KCl having a concentration of 3.3 M or less and every aqueous solution, which can be used as an internal solution of an electrode for use in the measurement, can be used as said internal solution for the gelatinized internal solutions 6, 9.

Also ethylene glycol, diethylene glycol, triethylene glycol and derivatives thereof can be used as the gel-evaporation inhibitor in addition to the above described glycerine.

Also every substance, for example gelatine, capable of gelatinizing internal liquids as well as the gel-evaporation inhibitor can be used as the gelatinizer and highly hygroscopic resins can be used together with the above described gelatinizers.

The quantities of the internal solution, the gel-evaporation inhibitor and the gelatinizer added are selected so that the internal solution and the gel-evaporation inhibitor can be gelatinized and the above described gel can be prevented from evaporating to maintain the surface of the gelatinized internal liquids 6, 9, in the wet condition in air.

The preferred embodiments of the above described quantities are as follows:

| (1) | Ethylene glycol | Agar-agar | 3.3 M-aqueous solution of KCl |
|-----|-----------------|-----------|-------------------------------|
|     | 40 cc           | 1 g       | 20 cc                         |

| (2) | Diethylene glycol | Agar-agar | 3.3 M-aqueous solution of KCl (supersaturated by AgCl) |
|---|---|---|---|
|  | 25 cc | 1 g | 5 cc |
| (3) | Glycerine | Agar-agar | 0.1 M-aqueous solution of KCl |
|  | 40 cc | 1 g | 20 cc |
| (4) | Glycerine | Agar-agar | 3.3 M-aqueous solution of KCl (supersaturated by AgCl) |
|  | 35 cc | 1 g | 25 cc |
| (5) | Glycerine | Gelatine | 3.3 M-aqueous solution of KCl (supersaturated by AgCl) |
|  | 40 cc | 20 g | 20 cc |

Each of the above described compositions was gelatinized to exhibit a handy hardness and maintained its surface in a wet condition when left unattended in air.

In order to prevent the surface of the gelatinized internal solutions 6, 9 from drying while they are left unattended at room temperature for a long time, a gel-evaporation inhibitor, such as glycerine, is preferably added to the internal solution, such as a 3.3 M-aqueous solution, at a ratio of 50 % by volume or more.

Although in the above described preferred embodiment a compound electrode for use in the measurement of pH is described, the present invention is applicable also to an ion electrode or a reference electrode.

Another preferred embodiment of the present invention is described with reference to an electrode for use in the measurement of salts.

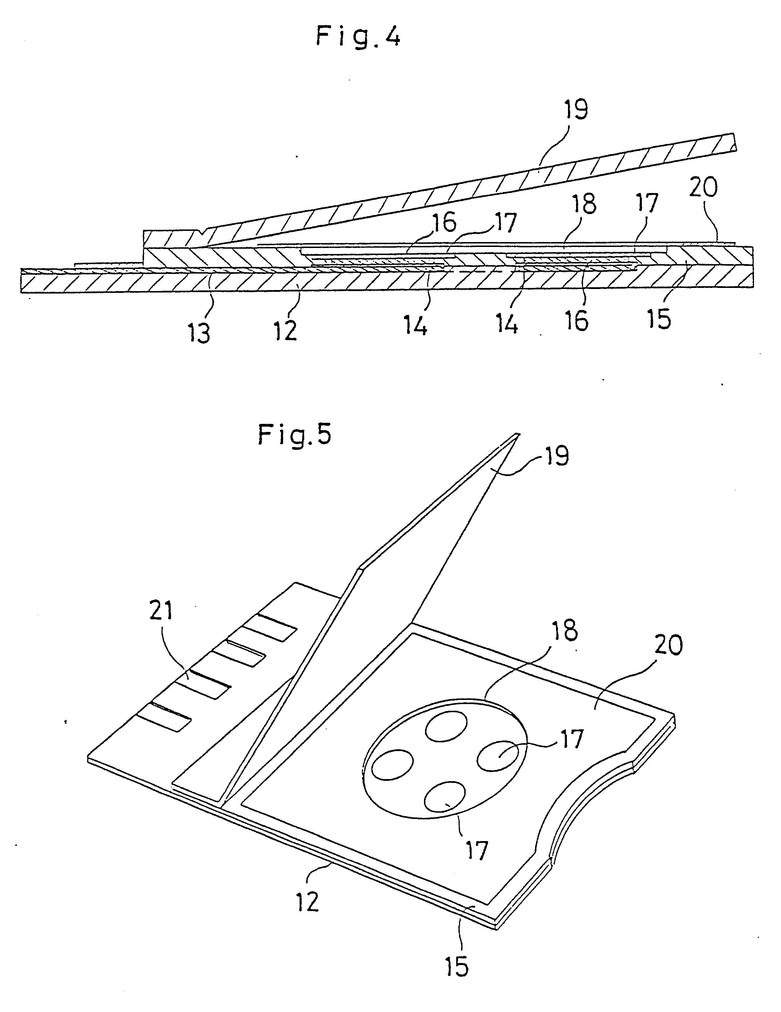

Referring to Figs. 4, 5, reference numeral 12 designates a substrate formed of vinyl chloride and the like provided with a silver electrode 13 formed thereon by screen printing or the like and internal electrodes 14 coated with silver chloride formed thereon at a plurality of places. Reference numeral 15 designates a supporting member made of vinyl chloride formed on the substrate 12 excepting the internal electrodes 14 formed by screen printing and the like.

Reference numeral 16 designates a gelatinized internal solution formed on each of the internal electrodes 14 in a pile which is the same as that in the above described preferred embodiment shown in Fig. 3. For example, the gelatinized internal solution 16 is heated to make it pasty and then arranged on each internal electrode 14 by screen printing.

Reference numeral 17 designates a responsive membrane overlapping each of the gelatinized internal solutions 16 and fixed with an adhesive arranged on a circumference thereof and reference numeral 18 designates a concave measuring portion formed on the front surface side of the supporting member 15 in such a size that it can receive each responsive membrane 17, a sample liquid being poured into said measuring concave portion 18. Reference numeral 19 designates a cover of the measuring concave portion 18 fixedly mounted on the supporting member 15 at one end thereof and reference numeral 20 designates an adhesive carried on the surface of the supporting member 15 to which the cover 19 is adhered so as to be able to tightly seal the measuring concave portion 18. Reference numeral 21 designates a lead wire for the silver electrode 13.

When using this electrode for the measurement of salts, about one drop of the sample liquid is put in the measuring concave portion 18 and then spread out on each responsive membrane 17 by the cover 19. Subsequently, the cover 19 is fixed with the adhesive 20 to measure a fixed amount of the sample liquid.

Since the surface of the gelatinized internal solution 16 does not dry in air before it is covered with the responsive membrane 17 in the manufacturing process, the electrode is easy to manufacture and a stabilized measurement can be attained.

According to the above preferred embodiments, an internal solution is gelatinized and a gel-evaporation inhibitor is added to the internal solution, so that the surface of the gelatinized internal solution does not dry even when leaving the gelatinized internal solution unattended in air of normal temperature for a long time so that it is possible to maintain it in the wet condition.

Accordingly, since a part of the above described gelatinized internal solution can be exposed to form a liquid junction in the formation of the liquid junction and it is unneccessary to renew the surface, its repeated use and preservation are easy. In addition, also in the case where the gelatinized internal solution is collectively housed in a cylinder, it is unnecessary to seal up the cylinder and the like tight and an electrode can be formed in the form of a thin film by screen printing and the like, so that an electrode for use in the measurement can be made small-sized and a stabilized measurement can always be attained.

Next, a further preferred embodiment of the present invention will be below described with reference to a sheet type compound electrode for use in the measurement of pH.

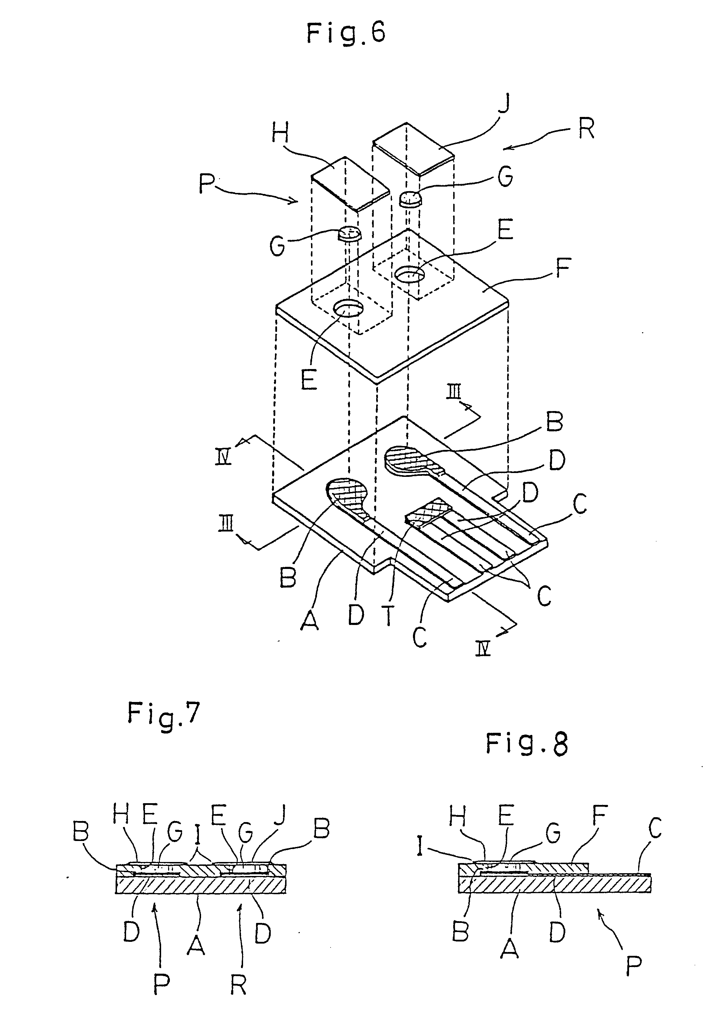

Referring to Figs. 6 to 8, A designates a substrate formed of a material having a sufficiently high electrical insu-

lating property even when impregnated in a solution containing electrolytes, such as polyethylene terephthalate, said substrate A being provided with two pairs of electrodes D, - an inside pair of electrodes D and an outside pair of electrodes D, - on an upper surface thereof formed by subjecting said upper surface of the substrate A to an anchor treatment with a silane-coupling agent and the like and graft processing and then adhering a paste containing electrically conductive substances, such as Ag, on the upper surface of the substrate A by silk screen printing. In addition, the base end portions positioned at the end edge portion of the substrates A of all electrodes D are used as lead portions C as they are. Besides, the other nearly circular pointed end portions positioned at nearly central portions of said substrates A of the outside pair of electrodes D, D are formed as internal electrode portions B, B coated with an electrode material such as AgCl while a temperature-compensating electrode portion T, such as a thermistor, is formed all over the space between the other pointed end portions positioned at a nearly central portion of said substrate A of the inside pair of electrodes D, D.

A support layer F (in this example a polyethylene terephthalate layer) formed of a material having a sufficiently high electrical insulating property similarly to said substrate A and provided with holes E, E at places corresponding to said internal electrode portions B, B is formed on the upper surface of said substrate A by screen printing or thermal fusion using an adhesive (for example a polyolefine series adhesive, a silicon resin series adhesive and the like) capable of securing a sufficiently high electrical insulating property (for example 10 MΩ or more) while exposing all of said lead portions C and their circumference. In addition, also the upper surface of this support layer F is subjected to the graft processing and the anchor treatment with a silane coupling agent and the like.

Furthermore, gelatinized electrolyte solutions G formed in an appointed shape (in this example a disc having a diameter of 5 mm and a thickness of about 0.2 mm) from a uniform mixture comprising a basic internal solution (for example a 3.3 M-aqueous solution of KCl supersaturated by AgCl with a phosphoric acid-buffer solution added), a gelatinizer, such as agar-agar or gelatine, and a moisture-evaporation inhibitor, such as glycerine or propylene glycol, is put in said both holes E, E of said support layer F by for example heating it to turn the material into a paste and then using the screen printing method or the like so that its upper surface slightly projects over the upper surface of said support layer F and overlaps on said internal electrode portions B, B.

In addition, a flat plate-like pH-response glass membrane H produced by subjecting a flat plate-like super-thin glass previously molded so as to have an appointed size to a high-speed surface heating treatment with preheating is adhered to the upper surface of the support layer F along the circumference thereof over the gelatinized member G for use as the internal solution put in one of said holes E, E by the use of the adhesive I having a sufficiently high electrical insulating property (for example a silicon series, epoxy series or urethane series organic high molecular adhesive containing silane coupling agents and the like) so that the lower surface of the flat plate-like pH-response glass membrane H contacts the upper surface of said gelatinized member G for use as the internal solution and the gelatinized member G for use as the internal solution may be sealed up hermetically in said hole E, thereby forming a glass electrode portion P for use in the measurement of pH.

Besides, a liquid junction membrane J formed of an inorganic sintered porous substance, an organic high molecular porous substance and the like impregnated with KCl is adhered to the upper surface of said support layer F along
the circumference thereof over the gelatinized solution G
for use as the internal solution put in the other hole E so
that the lower surface thereof may be contacted with the
upper surface of said gelatinized solution G of the internal solution, thereby forming a reference electrode portion
R. However, since the gelatinized solution G is used as the
internal solution in the above described manner, this liquid junction membrane J may be omitted.

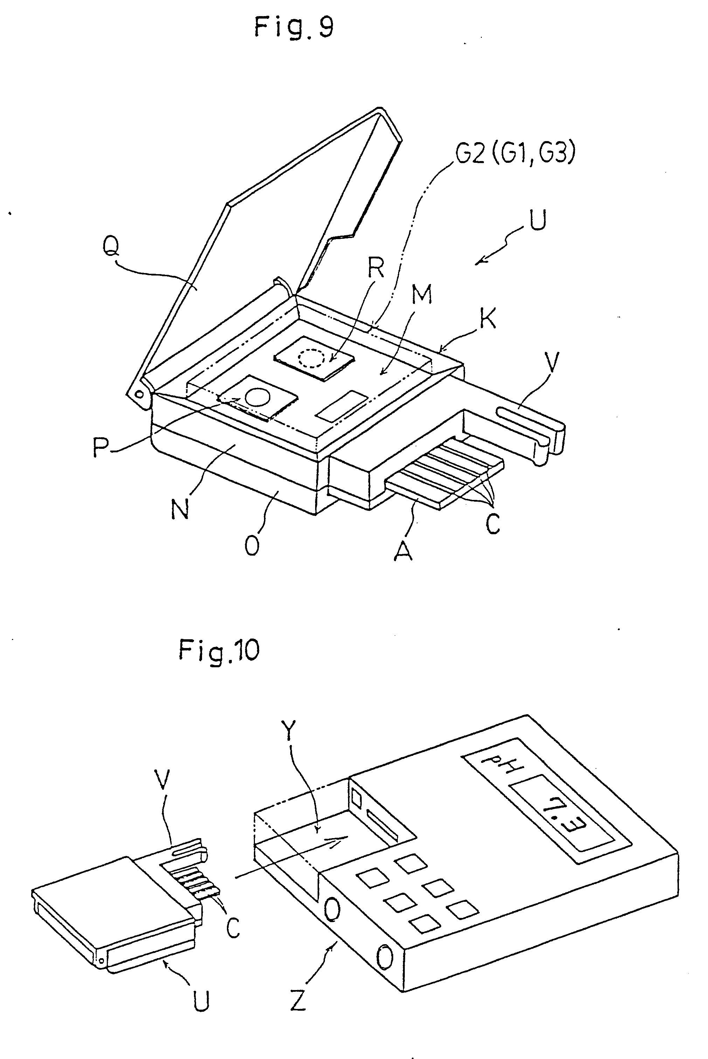

The electrode for use in the measurement of ions constructed in the above described manner has a total thickness of
about 0.5 mm and is housed in a casing K formed of a synthetic resin (having a depth of 23 mm, a width of 23 mm and
a height of 7 mm in this example) with releasing said glass
electrode portion P and reference electrode portion R toward the upper surface side and projecting one end edge
portion of the substrate A, on which said lead portions C
are formed, outward, whereby forming a tip-like measuring
electrode unit U as shown in Fig. 9. This casing K composing the tip-like measuring electrode unit U comprises an
upper frame member N forming a concave portion M for pouring a sample liquid thereinto, a bottom cover O for the
upper frame member ·N and an upper cover Q for said concave
portion M for pouring a sample liquid mounted on said upper
frame member N at one end edge portion thereof so as to be
freely swung and opened and closed. In addition, an engaging projection member V for a body Z of a measuring apparatus, which will be mentioned later, extends from an end
edge of the upper frame member N of the casing K of the
side from which said lead portions C are projected.

In operation of the tip-like measuring unit U including the
electrode for use in the measurement of ions having such a construction, said upper cover Q is opened and one drop or several drops of the sample liquid are poured into said concave portion M for to sufficiently bring the glass electrode P and the reference electrode R positioned in the bottom portion of the concave portion into contact with the sample liquid and then the upper cover Q is closed. Subsequently, the tip-like measuring electrode unit U is connectedly inserted into the fitting portion Y of the body Z of the measuring apparatus constructed in a desk elctronic computer type shape through said lead portions C and said engaging projection member as shown in Fig. 10 to measure a pH of the sample liquid.

The preservation of the electrode for use in the measurement of ions in the tip-like measuring electrode unit U while it is not being used as well for the calibration of the pH of the glass electrode portion P before and after the measurement are carried out by the following novel means.

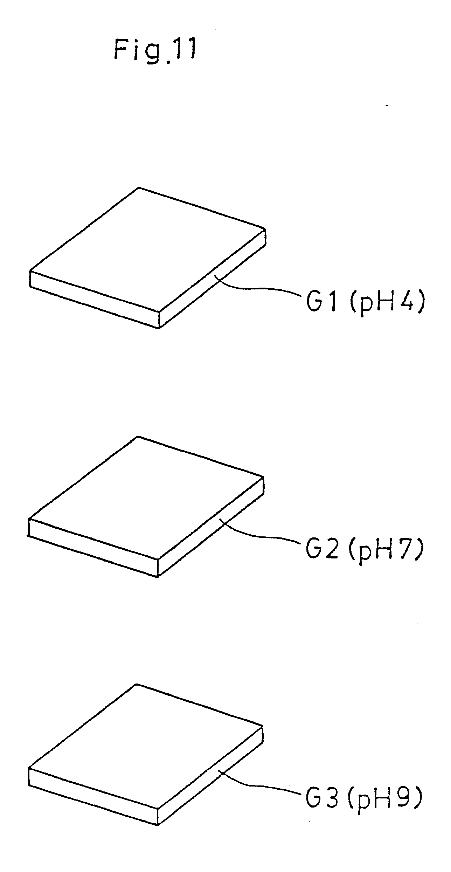

Plural kinds of gelatinized solutions (for example, G1 having a pH of 4, G2 having a pH of 7 and G3 having a pH of 9) are prepared by mixeding a gelatinizer, such as agar-agar or gelatine, and a moisture-evaporation inhibitor, such as glycerine or ethylene glycol, with an aqueous solution comprising an internal solution, a buffer solution, a pH-adjusting solution or the like or a combination thereof to gelatinize, setting the pH of the resulting gelatinized solution and molding the gelatinized solution to an appointed shape as shown in for example Fig. 11 (in this example, a rectangular shape having a depht of about 15 mm, a width of about 15 mm and a height of about 2 mm allowing the insertion into a concave portion M for pouring the sample liquid of the casing K constructing said tip-like measuring electrode unit U).

In the preservation of the electrode for use in the measurement of ions in the tip-like measuring electrode unit U while it is not being used, the gelatinized solution G 2 (having a pH of 7) is inserted into the concave portion M for pouring the sample liquid of the casing K (in short, placed on the glass electrode portion P and the reference electrode portion Q) and then the upper cover Q is closed, as shown by the dashed line in said Fig. 9. In addition, in the pH calibration of the glass electrode portion P, the gelatinized solutions G1, G2, G3 are inserted into the concave portion M for pouring the sample liquid (in short, placed on the glass electrode portion P and the reference electrode portion R) in turn also as shown by a dashed line in said Fig. 9 to carry out the measurement in the sample procedure as in said measurement of the sample liquid. In addition, in this case, it goes without saying that said gelatinized solutions G1, G2, G3 have the function of a pH calibrating gelatinized member, respectively. The gelatinized solution G2 (having a pH of 7) has also the function of a preserving gelatinized member common to the glass electrode portion P and the reference electrode portion R.

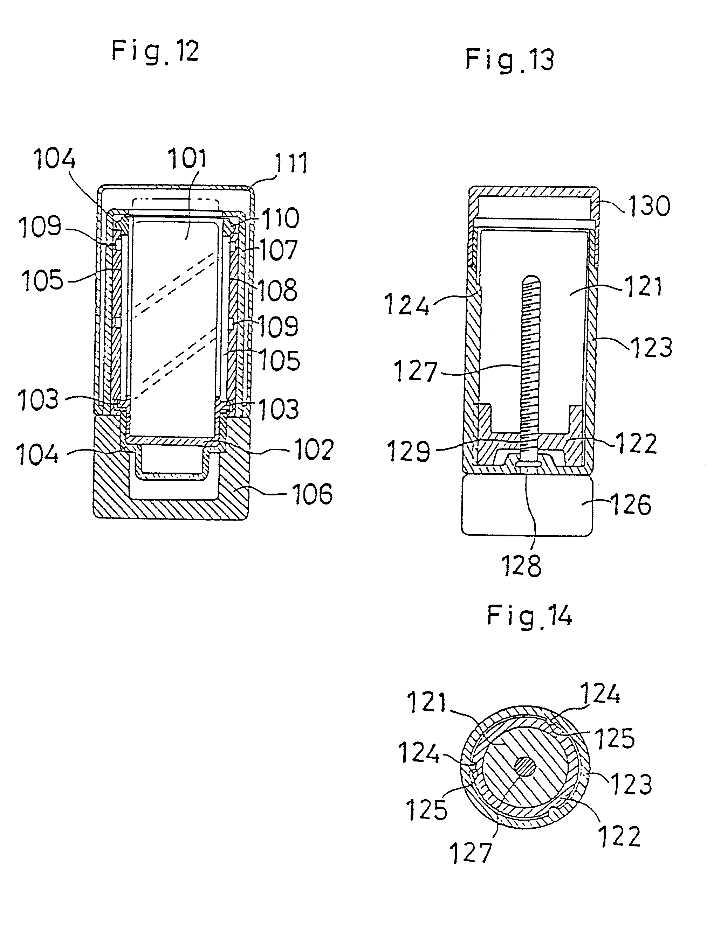

Next, a preferred embodiment of a calibrating standard solution according to the present invention is described with reference to Fig. 12.

Referring now to Fig. 12, reference numeral 101 designates a rod-like gelatinized standard solution obtained by adding glycerine as a gel-evaporation inhibitor to a calibrating standard solution such as KCl and gelatinizing the mixture with agar-agar. Reference numeral 102 designates a travelling vessel into which one end of the gelatinized standard solution is fixedly inserted. Reference numeral 103 designates an engaging projection from an outside surface of a circumferential wall of the travelling vessel 102.

Reference numeral 104 designates an inside cylinder, into which both the travelling vessel 102 and the gelatinized standard solution 101 are slidably inserted, said inside cylinder 104 being provided with a slit 105 in a direction of axis shaft line thereof, and said engaging projection 103 being slidably inserted into said slit 105. Reference numeral 106 designates a clyindrical pick-up member fixedly mounted on a side end portion of a bottom of the inside cylinder 104. Reference numeral 107 designates an outside cylinder, into which an engaging pipe 108 is fixedly inserted, and said engaging pipe 108 being provided with a spiral groove 109 formed on an inside circumferential surface thereof.

Said inside cylinder 104 is rotatably inserted into said engaging pipe 108 and a pointed end of said engaging projection 103 is inserted into said spiral groove 109. And, the outside cylinder 107 is supported by the pick-up member 106 together with the engaging pipe 108 at one end thereof and an engaging projection 110 formed on a periphery of a pointed end portion of said inside cylinder 104 is engaged with the other end of the engaging pipe 108, whereby the outside cylinder 107 is mounted on the inside cylinder 104. Reference numeral 111 designates a cap.

When the gelatinized standard solution 101 is used, the cap 111 is removed and then the outside cylinder 107 is rotated with fixing the pick-up member 106. Thereupon, the engaging projection 103 is moved along the slit 105 by rotating the spiral groove 109, whereby the gelatinized standard solution 101 is projected out of the outside cylinder 107, as shown by the dashed line, so that the responsive portion of the ion-measuring electrode to be calibrated is brought into contact with the surface of the gelatinized standard solution.

When the gelatinized standard solution is preserved or carried about, it is housed in the inside cylinder 104 collectively, as shown by the full line. Accordingly, the gelatinized standard solution 101 is protected by the cap 111, the inside cylinder 104 and the like, so that it can be easily preserved and carried about.

Also ethylene glycol, diethylene glycol, triethylene glycol, derivatives thereof and the like can be used as the gel-evaporation inhibitor in addition to the above described glycerine.

Every gelatinizer, for example gelatine, capable of gelatinizing standard solutions and gel-evaporation inhibitors can be used. Also the use of highly hygroscopic resins as or together with the gelatinizer is possible.

The standard solution, the gel-evaporation inhibitor and the gelatinizer are used in such a quantity that the standard solution and the gel-evaporation inhibitor can be gelatinized, and said gel can be prevented from evaporating, and the surface of the gelatinized standard solution can be maintained in the wet condition in air of ordinal temperature.

In the event that an aqueous solution of KCl is used as the standard solution, concrete examples for the above described composition are as follows:

| | | | |
|---|---|---|---|
| (1) | Ethylene glycol | Agar-agar | 3.3 M-aqueous solution of KCl |
| | 40 cc | 1 g | 20 cc |
| (2) | Diethylene glycol | Agar-agar | 3.3 M-aqueous solution of KCl (AgCl-supersaturated) |
| | 25 cc | 1 g | 5 cc |

| (3) | Glycerine | Agar-agar | 0.1 M-aqueous solution of KCl |
|---|---|---|---|
| | 40 cc | 1 g | 20 cc |
| (4) | Glycerine | Agar-agar | 3.3 M-aqueous solution of KCl (AgCl-supersaturated) |
| | 35 cc | 1 g | 25 cc |
| (5) | Glycerine | Gelatine | 3.3 M-aqueous solution of KCl (AgCl-supersaturated) |
| | 40 cc | 20 g | 20 cc |

The above described compositions are all gelatinized with a hardness suitable to handle and their surface is maintained in the wet condition in air for normal temperature for a long time.

The gel-evaporation inhibitor, such as glycerine, is preferably added to the standard solution, such as a 3.3 M-aqueous solution of KCl, at a ratio of 50 % or more by volume in order to prevent the surface of the gelatinized standard solution 101 from drying also in the event that the gelatinized standard solution 101 is left unattended for a long time in air of normal temperature.

Although an aqueous solution of KCl was used as the standard solution in the above described compositions, other standard solutions may be used.

Figs. 13, 14 show a second preferred embodiment of a calibrating standard sample according to the present invention.

Referring to Figs. 13, 14, reference numeral 121 designates a rod-like gelatinized standard solution which is same as in the above described first preferred embodiment. Referen-

ce numeral 122 designates a travelling member on which an end portion of the gelatinized standard solution 121 is fixedly mounted. Reference numeral 123 designates a cylindrical member, the gelatinized standard solution 121 and the travelling member 122 being slidably inserted into said cylindrical member 123, and a projection 124, which is formed on an inside surface of the cylindrical member 123 in the direction of an axis shaft line thereof, being engaged with a concave groove 125 formed in the travelling member 122.

Reference numeral 126 designates a pick-up member, a screw shaft 127 fixedly projecting from said pick-up member 126 being passed through a bottom wall of the cylindrical member 123, the screw shaft 127 being rotatably and detachably mounted on the cylindrical member 123 by means of an engaging projection 128 provided in the screw shaft 127, the screw shaft 127 being screwed in a threaded hole 129 of the travelling member 122, and the screw shaft 127 being inserted into the gelatinized standard solution 121. Reference numeral 130 designates a cap.

In this preferred embodiment, upon fixing the cylindrical member 123 and rotating the pick-up member 126, the gelatinized standard solution 121 is driven out of the cylindrical member 123 and enters the cylindrical member 123 again together with the travelling member 122 by the rotation of the screw shaft 127.

A calibrating standard sample according to the present embodiment is obtained by gelatinizing a calibrating standard solution with a gelatinizer and housed in a cylindrical vessel so as to be taken in and out, so that it can be reduced in volume, whereby its preservation and carrying can be simplified. For the calibration of an ion-measuring electrode it is necessary only to bring a responsive por-

tion of the ion-measuring electrode into contact with the surface of said gelatinized standard solution. Accordingly, the calibrating standard sample according to the present invention is simple in use.

In addition, a gel-evaporation inhibitor is added to the gelatinized standard solution to prevent it from drying so that its surface may be always maintained in the wet condition, so that a highly accurate calibration can be attained. Besides, since it is unnecessary to close the vessel tightly, a cylindrical vessel having an optional construction can be used, that is to say the vessel can be simplified in construction. Furthermore, since the gelatinized standard solution is housed in the cylindrical vessel in the form of rod so as to be taken in and out, it is easy to repeatedly use.

A gelatinized solution for an electrode for use in the measurement of ions according to the present invention is below described with reference to another preferred embodiment.

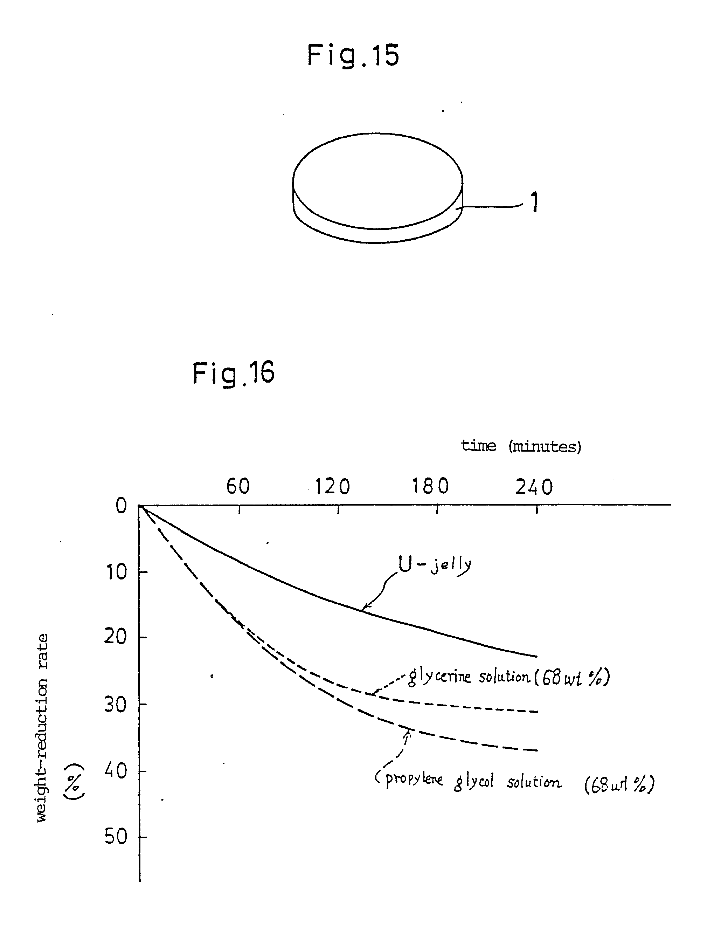

Fig. 15 shows a gelatinized solution 201 for use as an internal solution.

A high humidity-holding water-containing jelly, concretely speaking, U-jelly (trade name of a commodity developed recently by Showa Denko Co., Ltd) mainly comprising an acrylic polymer is dissolved in an internal solution, comprising for example a 3.3 M-aqueous solution of KCl supersaturated by AgCl with a phosphoric acid-buffer solution added, and then the resulting solution is gelatinized by adding a gelatinizer selected from a group consisting of agar-agar, gelatine, glue, alginic acid and the like. Subsequently, the gelatinized product is molded in the appointed shape (in this example, in a disc-like shape for a sheet type electrode for use in the measurement of ions, as shown in the above described Figs. 6 to 8, having a diameter of about 5 mm and a thickness of about 0.1 to 0.2 mm) by cutting, molding and the like.

Said U-jelly used as the high humidity-holding water-containing jelly was originally developed by Showa Denko Co., Ltd. as a base agent for a cosmetic cream. It is transparent water-containing jelly mainly comprising the sodium salt of an acrylic polymer having a remarkably high compatibility with other aqueous solutions and being remarkably superior to the conventional moisture-evaporation inhibitors, such as glycerine and propylene glycol, in moisture-holding function and vapour pressure equilibrium-holding function due to the formation of clathrate by hydrogen bonds between polymeric molecules, as obvious also from one characteristic example shown in Fig. 16. Accordingly, this jelly can maintain a sufficient lubricity for a long time without drying out even when it is exposed to air for a long time and the adsorption of water in air and dewing are hardly produced and as a result, it has the characteristic that its surface can be always maintained in a moderate wet condition.

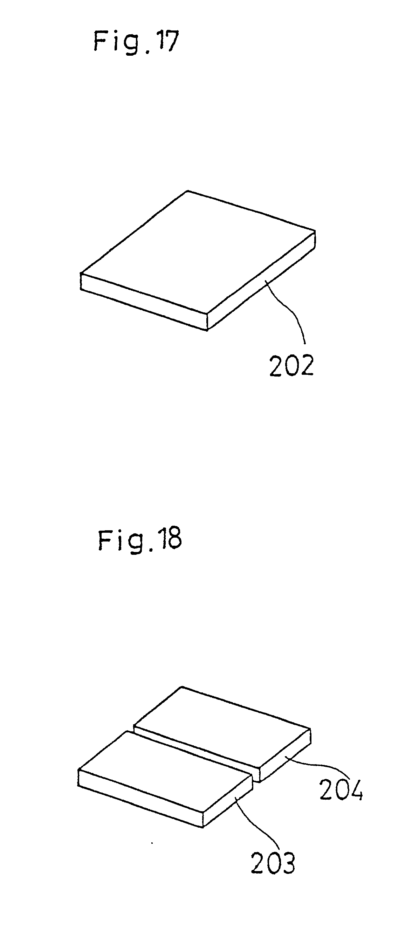

Fig. 17 shows a gelatinized solution 202 for use in the calibration of pH of an electrode according to another preferred embodiment (however, if a pH is selected at about 7, it can be used also as a gelatinized solution for use in the preservation of an electrode). High humidity-holding water-containing jelly (U-jelly) mainly comprising an acrylic polymer like the one of the above described preferred embodiment is dissolved in an appointed aqueous solution comprising a buffer-solution selected from the group consisting of phosphoric acid, hydrochloric acid, acetic acid, potassium hydrogen phthalate, potassium dihydrogen citrate and the like and a pH-adjusting solution selected from the group consisting of aqueous solutions of potassium chloride (KCl), sodium hydroxide, sodium tetraborate, sodium acetate, sodium carbonate and the like at a suitable ratio and then, the resulting solution is gelatinized by adding a gelatinizer selected from the group consisting of agar-agar, gelatine, glue, alginic acid and the like. Subsequently, the gelatinized product is molded so as to have an appointed pH (for example pH of 4, pH of 7 and pH of 9) and an appointed shape (in this example, a rectangular member having a depth of about 15 mm, a width of about 15 mm and a height of about 2 mm capable of inserting into a concave portion M for pouring the sample liquid of the casing K constructing the tip-like measuring electrode unit U as shown in the above described Fig. 9).

Each of the gelatinized solutions 202, the pH of which was set at the appointed values (4, 7, 9) are satisfactorily used for the preservation of the electrode for use in the measurement of ions in the tip-like measuring electrode unit U while it is not being used and for the pH-calibration of the glass electrode portion of the electrode for use in the measurement of ions in the same manner as in the gelatinized solutions G1, G2, G3 already described. In addition, although it is desired that the gelatinized solution having a pH of 7 is used as the member 202 for the preservation of the electrode common to the glass electrode and reference electrode, it is not always necessary that the member 202 has a pH of strictly 7. Besides, there is no harm in that the pH value is not clear.

Next, the results of the investigation of the change of pH value with the lapse of time for several kinds of gelatinized solutions 202 for use in the pH-calibration are described.

Samples such as
(1)     a mixture comprising U-jelly (pH of 7.4) of 34 g, a 0.25 M-phosphoric acid-buffer solution (pH of 6.92) of 6 g containing a 3.3 M-aqueous solution of KCl and agar-agar of 0.5 g,

(2)    a mixture comprising U-jelly (pH of 7.4) of 28 g, a 0.25 M-phosphoric acid-buffer solution (pH of 7.13) of 12 g containing a 3.3 M-aqueous solution of KCl and agar-agar of 0.5 g,

(3)    a mixture comprising U-jelly (pH of 7.4) of 20 g, a 0.25 M-phosphoric acid-buffer solution (pH of 7.13) of 20 g containing a 3.3 M-aqueous solution of KCl and agar-agar of 0.5 g
were heated up to about 100°C to dissolve the agar-agar and then spread over a flat plate having a size of about 30 cm x 30 cm. Subsequently, a spacer of about 2 mm was placed on the flat plate and a glass plate was placed on the spacer to cool, thereby gelatinizing the material. Then, the gelatinized product was cut to the appointed shape (rectangular member having a depth of about 15 mm, a width of about 15 mm and a height of about 2 mm) and tested on pH immediately after the preparation of the gelatinized member and after the lapse of an appointed period.

As a result, it is found, as shown in the following table, that the initial pH is very stably maintained and hardly changes during a long time.

| Sample | Measured pH value | | |
|---|---|---|---|
| | Immediately after preparation | After 8 days | After one month |
| (1) | 6.76 | – | 6.77 |
| (2) | 7.03 | 6.98 | – |
| (3) | 6.95 | 6.96 | – |

In addition, although in the above described preferred em-

bodiment the gelatinized solution 202 having a pH adjusted at 7 and molded to a rectangular member having a size of about 15 mm deep, about 15 mm wide and about 2 mm high so as to be inserted into the concave portion M for pouring the sample liquid of the casing K constructing the tip-like measuring electrode unit U as shown in the above described Fig. 9 was used as the gelatinized solution for use in the preservation of an electrode common to the glass electrode and the reference electrode, it may be constructed in two parts as shown in Fig. 18 as a gelatinized solution 203 for use in the preservation of a glass electrode and a gelatinized solution 204 for use in the preservation of a reference electrode. In this case, the gelatinized solution 203 for use in the preservation of the glass electrode is adjusted to a pH of 7 and the gelatinized solution 204 for use in the preservation of the reference electrode comprises the same composition as the solution 201 for use in the internal solution in the above described preferred embodiment. The gelatinized solutions 203, 204 ought to be molded in a size nearly half that of said gelatinized solution 202 (that is to say, to a rectangular shape having a depth of about 15 mm, a width of about 7 mm and a height of about 2 mm), respectively.

Besides, the surface of all of the gelatinized solutions 201, 202, 203 and 204 for use in the measurement of ions according to the above described preferred embodiments can be always maintained in a moderate wet condition (not excessively soft and sticky, moist and neat condition) for a long time on account of the superior vapour-pressure equilibrium condiction holding function of U-jelly added to the gelatinized solutions. However, for example in order to increase the contact to the electrode surface, a small amount of a hygroscopic substance (such as glycerine) may be added to finely adjust the wet condition of the surface if necessary.

As is obvious from the above detailed description, in the gelatinized electrolyte solutions for ion-measuring electrodes according to the preferred embodiments of the invention can always be maintained under a moderate wet condition of their surface, whereby the desired functions can be stably exhibited for a long time without producing any deterioration such as change in concentration (change in pH), since a high humidity-holding water-containing jelly mainly comprising an acrylic polymer more superior to glycerine or propylene glycol in moisture-holding function and vapour-pressure equilibrium state holding function is used as a moisture-evaporation inhibitor to be added to the electrolyte solution. Accordingly, superior effects are exhibited in that the electrolyte solutions according to the present invention can be very satisfactorily used as members for use as an internal solution of a glass electrode and a reference electrode for the glass electrode, as members for use in the preservation of electrodes and as members for use in the pH-calibration particularly in the case of a sheet type electrode for the measurement of ions.

## Claims

1.      An electrolyte solution for ion-measuring electrodes, **characterized in that** said solution is gelatinized with a gelatinizer and contains a gel-evaporation inhibitor.

2.      The solution according to claim 1, **characterized in that** it is an internal solution, a buffer solution, a pH-adjusting solution, an ion-adjusting solution, a calibrating standard solution or a combination thereof.

3.      The solution according to claim 1, **characterized in that** said gelatinizer is selected from the group comprising gelatine, agar-agar, glue and alginic acid.

4.      The solution according to claim 1, **characterized in that** said gel-evaporation inhibitor has a melting point lower than that of water, a boiling point higher than that of water and a low vapour pressure at normal temperature.

5.      The solution according to claim 4, **characterized in that** said gel-evaporation inhibitor is selected from the group comprising glycerine, ethylene glycol, propylene glycol, diethylene glycol, triethylene glycol and derivatives thereof and high humidity-holding water containing jellies.

6.      The solution according to claim 5, **characterized in that** the high humidity-holding water containing jelly is a highly hygroscopic resin on the basis of the sodium salt of an acrylic polymer.

7.      The solution according to one of claims 1 to 6, **characterized in that** the solution is a gelatinized standard solution in the form of a rod being housed in a cylindrical vessel to be freely taken in and out.

8.     A method for the manufacture of the electrolyte solution according to claims 1 to 7, **characterized by** dissolving a gel-evaporation inhibitor in the appointed aqueous
electrolyte solution, adding a gelatinizer to the solution
obtained, molding and gelatinizing the resulting solution.

9.     The method according to claim 8, **characterized by**
molding the solution containing the gelatinizer to a predetermined shape before or after gelatinizing.

# Fig.1

# Fig.2

HORIBA, LTD. - HO-255

# Fig.3

1
2
4
5
3
6

7
8
9
10

0 270 751

## Fig.4

## Fig.5

## Fig.9

G2(G1,G3)

U

Q

R

M

K

V

P

N

O

A

C

## Fig.10

Y

V

C

U

Z

O

PH

7.3

## Fig.11

G1 (pH4)

G2 (pH7)

G3 (pH9)

Fig.12

Fig.13

Fig.14

## Fig.15

## Fig.16

time (minutes)

weight-reduction rate (%)

U - jelly

glycerine solution (68 wt %)

propylene glycol solution (68 wt %)

Fig.17

202

Fig.18

204

203